# EUROPEAN PATENT SPECIFICATION

(11) **EP 3 272 554 B1**
(45) Date of publication and mention of the grant of the patent: **10.07.2019**
(21) Application number: 16768595.7
(22) Date of filing: 16.03.2016
(51) Int. Cl.: B60C 11/03, B60C 5/00

(54) **MOTORCYCLE TIRE**
MOTORRADREIFEN
PNEUMATIQUE POUR MOTOCYCLE

(30) Priority: 20.03.2015 JP 2015058787
(43) Date of publication of application: 24.01.2018
(73) Proprietor: Bridgestone Corporation, Tokyo 104-8340 (JP)
(72) Inventor: DAIRIKI, Takahiro, Tokyo 104-8340 (JP); ITOI, Dyta, Tokyo 104-8340 (JP)
(74) Representative: Oxley, Robin John George
(86) International application number: PCT/JP2016/058392
(87) International publication number: WO 2016/152692

(56) References cited:
- GB-A- 2 114 069
- JP-A- 2000 043 509
- JP-A- 2001 030 719
- JP-A- 2001 315 506
- JP-A- 2012 513 930
- JP-A- 2013 022 971
- JP-A- 2013 082 453
- JP-A- 2013 180 664

## Description

### TECHNICAL FIELD

The present invention relates to a motorcycle tire (hereinafter, also simply referred to as "tire"). More particularly, the present invention relates to a motorcycle tire whose wear resistance and drainage performance are improved by refining the tread pattern.

### BACKGROUND ART

Because of the characteristic of two-wheeled vehicles to make turns by tilting the body, which is different from four-wheeled vehicles such as passenger cars and trucks, motorcycle tires have a shape in which the crown section has a smaller curvature and a rounder cross-section than four-wheeled vehicle tires. Therefore, depending on the position of the ground-contacting portion in a ground contact state, the slipping parts in the ground-contacting surface may be uneven particularly when a large driving force is applied, and this is likely to cause uneven wear in which specific parts are rapidly worn out. In such motorcycle tires, a variety of tread patterns are formed by adopting plural combinations of the number and the shape of grooves arranged in the tire tread section so as to improve various tire performances, such as drainage performance in wet conditions and wear resistance.

For instance, Patent Document 1 proposes a motorcycle tire in which thermal degradation of the tread section can be inhibited while maintaining the turning performance and serviceable life (wear resistance) of the tire. In this tire proposed in Patent Document 1, the angle and pitch of the inner-side inclined main grooves arranged at prescribed positions, the inclined narrow grooves arranged between adjacent inner-side inclined main grooves, and the land ratio of the surface in contact with the ground in straight running are adjusted. Further, Patent Document 1 also discloses that the drainage performance can be further improved by adjusting, for example, the land ratio of the tread section, the arrangement pitch of the inner-side inclined main grooves, and the width of the inner-side inclined main grooves. Attention is drawn to the disclosures of JP2013-082453, JP2013-022971, JP2012-513930 and JP2013-180664.

### RELATED ART DOCUMENT

### PATENT DOCUMENT

Patent Document 1: Japanese Unexamined Patent Application Publication No. 2013-180664

### SUMMARY OF THE INVENTION

### PROBLEMS TO BE SOLVED BY THE INVENTION

Generally speaking, for improvement of the wear resistance of a tire, it is effective to increase the land portion of the tread section; however, the groove ratio in the tread section decreases as the land portion is increased. This makes it difficult to maintain the drainage performance, and it is thus extremely difficult to satisfy both wear resistance and drainage performance. The tire proposed in Patent Document 1 also has these problems and cannot sufficiently comply with the demands of satisfying both wear resistance and drainage performance; therefore, a further improvement in these properties is desired.

In view of the above, an object of the present invention is to provide a motorcycle tire whose wear resistance and drainage performance are improved by refining the tread pattern.

### MEANS FOR SOLVING THE PROBLEMS

The present inventors intensively studied to solve the above-described problems and consequently discovered that, by allowing inclined main grooves arranged in the tread section to have a prescribed inclination angle and allowing shallow grooves to have a prescribed inclination direction, the wear resistance and the drainage performance can be further improved and the problems can be solved as a result, thereby completing the present invention.

That is, the motorcycle tire of the present invention is a motorcycle tire as claimed in claim 1.

In the tire of the present invention, it is preferred that the first inclined main grooves and the second inclined main grooves intersect with the shallow grooves. In the tire of the present invention, it is also preferred that the first inclined main grooves and the shallow grooves intersect with each other on the tire width direction outer side relative to the midpoints of the first inclined main grooves in the tire width direction; and that the second inclined main grooves and the shallow grooves intersect with each other on the tire width direction outer side relative to the midpoints of the second inclined main grooves in the tire width direction. Further, in the tire of the present invention, it is preferred that the shallow grooves extend to the tire width direction outer side relative to the tire width direction outer ends of the second inclined main grooves. Still further, in the tire of the present invention, it is preferred that the shallow grooves have a depth of 0.1 to 0.5 mm. The tire of the present invention can be suitably used as a front tire of a motorcycle.

### EFFECTS OF THE INVENTION

According to the present invention, a motorcycle tire whose wear resistance and drainage performance are improved by refining the tread pattern can be provided.

### BRIEF DESCRIPTION OF THE DRAWINGS

FIG. 1 is one example of a partial development view illustrating the tread section of a motorcycle tire according to one preferred embodiment of the present invention.
FIG. 2 is one example of a cross-sectional view taken along the width direction of a motorcycle tire according to one preferred embodiment of the present invention.

### MODE FOR CARRYING OUT THE INVENTION

The motorcycle tire of the present invention will now be described in detail referring to the drawings.

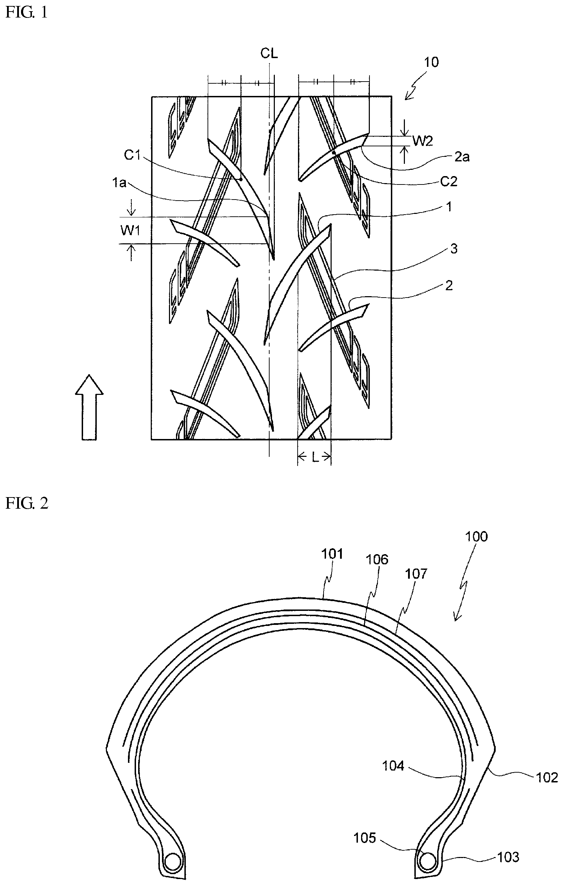

The motorcycle tire of the present invention is a motorcycle tire which comprises: a tread section; and side wall sections and bead sections that continuously extend on both sides of the tread section, and whose rotation direction when fitted to a motorcycle is designated, and the motorcycle tire of the present invention exerts its effects most prominently when used as a front tire. FIG. 1 is one example of a partial development view illustrating the tread section of a motorcycle tire according to one preferred embodiment of the present invention, and the arrow drawn therein represents the rotation direction of the tire.

As illustrated in FIG. 1, in the tire of the present invention, first inclined main grooves 1, which are inclined with respect to the tire circumferential direction, and second inclined main grooves 2, which are inclined in the same direction as the first inclined main grooves 1 but at a different angle, are arranged in a tread section 10. In the illustrated example, the first inclined main grooves 1 are arranged to extend from a central part to a shoulder part, and the second inclined main grooves 2 are arranged in the shoulder part. It is noted here that the term "central part" used herein refers to a region of the tread section 10 that comes into contact with the road surface when the tire is filled with air at a normal inner pressure, a normal load was applied thereto and a motorcycle fitted with the tire is put in a standing position, and the term "shoulder part" used herein refers to the regions of the tread section 10 on both sides of the central part. The inclined main grooves can each have a depth of, for example, 3 to 6 mm at the deepest point.

In the tire of the present invention, the drainage performance is ensured by the first inclined main grooves 1 and the second main inclined grooves 2, and it is preferred that the first inclined main grooves 1 and the second main inclined grooves 2 both have a linear shape or a curved shape. In the illustrated example, the first inclined main grooves 1 and the second main inclined grooves 2 both have a curved shape. The reason for this is because smooth drainage is inhibited when the inclined main grooves have a bending point and, in order to prevent this, in the tire of the present invention, the inclined main grooves are formed in a linear or curved shape with no bending point.

Further, in the tire of the present invention, as illustrated in FIG. 1, shallow grooves 3 (three of them in the illustrated example), which are inclined in a different direction from the first inclined main grooves 1 and the second main inclined grooves 2, are arranged. The drainage performance can be further improved by the shallow grooves 3. The shallow grooves 3 refer to grooves having a depth of 10% or less with respect to the depth of the respective first inclined main grooves 1 and second inclined main grooves 2. Brand-new tires are slippery due to the presence of silicon used in the tire vulcanization process on their surface layers. In addition, it is not preferable to arrange a large number of main grooves in the shoulder part. Therefore, in the tire of the present invention, the initial drainage performance of the shoulder part is improved by arranging the shallow grooves 3 in the shoulder part. Since the rigidity of the central part may be reduced and the wear resistance may thus be deteriorated by arranging the shallow grooves 3 in the central part, in the tire of the present invention, the shallow grooves 3 are arranged only in the shoulder part. In the tire of the present invention, by allowing the shallow grooves 3 to have a depth of 0.1 to 0.5 mm, the drainage performance can be favorably improved while maintaining the rigidity of the tread section.

Further, as described above, the tire of the present invention is suitably used as a front tire, and the inputs to the front tire are braking force and lateral force. Therefore, in order to allow the tire to effectively exert a turning force, it is preferred to arrange grooves in a direction that interferes with the inputs as little as possible, that is, in the direction along the inputs. From this standpoint, it is preferred that the first inclined main grooves 1 and the second main inclined grooves 2 are all configured in a curved shape whose center of the radius of curvature is on the reverse rotation side of the designated tire rotation direction, that is, on the trailing side with respect to the running direction. Moreover, the angle of the shallow grooves 3 is preferably aligned with the normal direction with respect to the direction along the inputs.

In the illustrated example, the first inclined main grooves 1 and the second main inclined grooves 2 are in communication with the shallow grooves 3; however, the tire of the present invention may also take a configuration in which the first inclined main grooves 1 and the second main inclined grooves 2 are not in communication with the shallow grooves 3 and the shallow grooves 3 are arranged between and without intersecting with the respective first inclined main grooves 1 and second inclined main grooves 2. Preferably, the shallow grooves 3 are arranged in such a manner to intersect with the first inclined main grooves 1 and the second main inclined grooves 2. This allows water flowing along the shallow grooves to flow into the inclined main grooves and to be drained from the inclined main grooves, so that the drainage performance can be further improved.

In the tire of the present invention, it is also preferred that the first inclined main grooves 1 and the shallow grooves 3 intersect with each other on the tire width direction outer side relative to the midpoint C1 of each first inclined main groove 1 in the tire width direction; and that the second inclined main grooves 2 and the shallow grooves 3 intersect with each other on the tire width direction outer side relative to the midpoint C2 of each second inclined main groove 2 in the tire width direction. As described above, the shallow grooves 3 are required to be arranged in the shoulder part. In addition, it is preferred that the shallow grooves 3 intersect with the first inclined main grooves 1 and the second inclined main grooves 2. These requirements can be simultaneously satisfied by arranging the shallow grooves 3 in the above-described manner. Moreover, since the ground contact-leading parts of the first inclined main grooves 1 and those of the second inclined main grooves 2 are on the shoulder side, drainage can start at the moment when these parts come into contact with the ground. Taking into consideration the drainage effect of the shoulder part, the shallow grooves 3 preferably extend to the tire width direction outer side relative to the tire width direction outer ends of the second inclined main grooves 2.

Further, in the tire of the present invention, it is preferred that the part of each first inclined main groove 1 where the distance between the groove walls in the tire circumferential direction is the maximum W1 exists on the inner side relative to the midpoint C1 of the first inclined main groove 1 in the tire width direction; and that the part of each second inclined main groove 2 where the distance between the groove walls in the tire circumferential direction is the maximum W2 exists on the outer side relative to the midpoint C2 of the second inclined main groove 2 in the tire width direction. That is, the first inclined main grooves 1 are thicker on the tire width direction inner side, while the second inclined main grooves 2 are thicker on the tire width direction outer side. In the illustrated example, the width of each first inclined main groove 1 gradually decreases toward the outer side in the tire width direction, while the width of each second inclined main groove 2 decreases toward the inner side in the tire width direction.

By making the first inclined main grooves 1 thicker on the tire width direction inner side in this manner, the drainage performance of the central part can be improved, which is effective for inhibiting the hydroplaning phenomenon during high-speed travel. Moreover, by making the second inclined main grooves 2 thicker on the tire width direction outer side, excessive pattern rigidity of the shoulder part can be reduced, so that the wear resistance of the shoulder part can be improved. In order to favorably obtain these effects, the part of each first inclined main groove 1 where the distance between the groove walls in the tire circumferential direction is the maximum is preferably the tire width direction inner end 1a of the groove wall on the rotation-direction leading side of the first inclined main groove 1, and the part of each second inclined main groove 2 where the distance between the groove walls in the tire circumferential direction is the maximum is preferably the tire width direction outer end 2a of the groove wall on the rotation-direction trailing side of the second inclined main groove 2.

Still further, in the tire of the present invention, the first inclined main grooves 1 extend over the tire equator CL. By arranging the first inclined main grooves 1 across the equator CL, the pattern rigidity along the equator CL can be reduced, and this consequently enables to perform steering with a small force. In the illustrated example, the second inclined main grooves 2 do not extend to the central part. The reason for this is because, when the second inclined main grooves 2 extend to the central part, the rigidity of the central part is excessively reduced, and this may lead to deterioration of the wear resistance of the central part.

In the illustrated example, the tire width direction outer ends of the second inclined main grooves 2 are on the outer side relative to the tire width direction outer ends of the first inclined main grooves 1. The reason for this is because, in motorcycles, since turns are made by tilting the motorcycle body at the time of cornering, the shoulder part of the tire comes into contact with the road surface and, when the first inclined main grooves 1 extend to the tire width direction outer side of the tread section 10 further than the second inclined main grooves 2, the shoulder part does not have sufficient rigidity and the cornering performance may thus be impaired. It is noted here that, although the first inclined main grooves 1 are longer than the second inclined main grooves 2, the tire of the present invention is not restricted to this configuration.

Yet still further, in the tire of the present invention, it is preferred that the second inclined main grooves 2 at least partially overlap with the first inclined main grooves 1 in the tire circumferential direction, and the tire width direction length of the region where the first inclined main grooves 1 and the second inclined main grooves 2 overlap with each other (overlapping length L) is preferably 30 to 60% of the length of the first inclined main grooves 1 in the tire circumferential direction. It is noted here that the overlapping length L is the projected length of each inclined main groove in the tire width direction, not the length along each inclined main groove. This configuration enables to set an appropriate distance between the respective first inclined main grooves 1 and second inclined main grooves 2.

That is, when the overlapping length L is greater than 60%, the second inclined main grooves 2 are close to each first inclined main groove 1 on the rotation-direction leading side of the tire and the negative distribution in the width direction is thus uneven (the negative ratio is locally small in the central part or the shoulder part), making it difficult to attain stable wet performance as the camber angle is increased. Meanwhile, when the overlapping length L is less than 30% as well, since the negative ratio is locally small in the tread intermediate region, it is after all difficult to attain stable wet performance as the camber angle is increased.

Furthermore, in the tire of the present invention, it is preferred that the second inclined main grooves 2 are more inclined than the first inclined main grooves 1 with respect to the tire circumferential direction. In motorcycles, since turns are made by tilting the motorcycle body at the time of cornering, the shoulder part of the tire comes into contact with the road surface. Accordingly, during cornering, a force is applied to the shoulder part in a direction close to the tire width direction. Therefore, when the angle of the second inclined main grooves 2 in the shoulder part is close to the tire circumferential direction, the shoulder part is excessively deformed and the driving stability during cornering is thereby reduced. In the tire of the present invention, the angle of the first inclined main grooves 1 with respect to the tire circumferential direction is preferably 20 to 40°, and the angle of the second inclined main grooves 2 with respect to the tire circumferential direction is preferably 40 to 70°. It is noted here that the angle of the first inclined main grooves 1 and that of the second inclined main grooves 2 each refer to an angle formed by a line connecting the centers of the tire width direction ends of the respective grooves and the tire circumferential direction.

In the tire of the present invention, as long as the relationships of the shallow grooves, the first inclined main grooves and the second inclined main grooves satisfy the above-described requirements, there is no other particular restriction. For instance, the shallow grooves 3 illustrated in FIG. 1 play an auxiliary role of the first inclined main grooves 1 and the second inclined main grooves 2 during drainage; however, the shape of the shallow grooves 3 is not particularly restricted. In the illustrated example, the shallow grooves 3 are three grooves that are inclined in the opposite direction of the first inclined main grooves 1 and the second inclined main grooves 2 and have a shape in which both ends of each groove are closed; however, the configuration of the shallow grooves 3 is not restricted thereto. For instance, the shallow grooves 3 may be in the form of a single straight line or a curve line.

FIG. 2 is one example of a cross-sectional view taken along the width direction of a motorcycle tire according to one preferred embodiment of the present invention. As illustrated in FIG. 2, a tire 100 of the present invention comprises: a tread section 101; a pair of side wall sections 102, which continuously extend on both sides of the tread section 101; a pair of bead sections 103, which continuously extend from each of the pair of the side wall sections 102; and a carcass 104, which is composed of at least one carcass ply layer (one carcass ply layers in the illustrated example) reinforcing the above-described sections over the range between the bead sections 103. In the illustrated example, both ends of the carcass 104 are folded around a bead core 105 from the inside to the outside of the tire to be anchored; however, the ends of the carcass 104 may each be sandwiched and anchored by a bead wire.

Further, in the tire illustrated in FIG. 2, a belt layer 106 is arranged on the tire radial direction outer side of the carcass 104. The belt cord of the belt layer 106 is also not particularly restricted, and any known non-extensible high-elasticity cord can be used. For example, an aromatic aramid cord or a steel cord can be suitably used. In the tire 100 illustrated in FIG. 2, a spiral belt layer 107 is further arranged on the tire radial direction outer side of the belt layer 106. This spiral belt layer 107 is formed by spirally winding in the circumferential direction an elongated rubber-coated cord obtained by coating a single cord with rubber or a strip-form ply obtained by coating a plurality of cords with rubber, and the cord(s) can be selected as appropriate from, for example, steel cords, cords made of organic fibers such as aramid (e.g., trade name "Kevlar®" manufactured by DuPont), polyethylene naphthalate (PEN), polyethylene terephthalate (PET), rayon or nylon, and cords made of a material such as glass fiber or carbon fiber.

### EXAMPLES

The present invention will now be described in more detail by way of examples thereof.

### <Example 1>

A motorcycle tire having a tread pattern of the type illustrated in FIG. 1 was produced at a size of 120/70ZR17M/C. The first inclined main grooves had a shape of being thick on the tire width direction inner side and gradually getting narrower toward the tire width direction outer side, and the second inclined main grooves had a shape of being thick on the tire width direction outer side and gradually getting narrower toward the tire width direction inner side. The shallow grooves had an angle of 20° with respect to the tire circumferential direction, and the points of intersection between the shallow grooves and the first and second inclined main grooves were positioned on the tire width direction outer side by more than 1/2 of the length of each inclined main groove in the tire width direction. The shallow grooves had a depth of 0.3 mm and were arranged only in the shoulder part.

The maximum distance between the groove walls of each first inclined main groove was set at 14 mm, and the position of this maximum distance between the groove walls of each first inclined main groove was the tire width direction inner end of the groove wall on the rotation direction leading side of the first inclined main groove. Further, the maximum distance between the groove walls of each second inclined main groove was set at 7 mm. The position of this maximum distance between the groove walls of each second inclined main groove was the tire width direction outer end of the groove wall on the rotation direction trailing side of the second inclined main groove. Moreover, the first inclined main grooves were arranged across the tire equator, and the overlapping length L of the first and second inclined main grooves was 45%. The first inclined main grooves had an angle of 30° with respect to the tire circumferential direction, and the second inclined main grooves had an angle of 55° with respect to the tire circumferential direction.

### <Example 2>

The motorcycle tire of Example 2 was produced in the same manner as in Example 1, except that the shallow grooves did not extend to the tire width direction outer side of the second inclined main grooves.

### <Example 3>

The motorcycle tire of Example 3 was produced in the same manner as in Example 1, except that the shallow grooves intersected with neither the first inclined main grooves nor the second inclined main grooves.

### <Example 4>

The motorcycle tire of Example 4 was produced in the same manner as in Example 1, except that the shallow grooves had a depth of 1.0 mm.

### <Example 5>

The motorcycle tire of Example 5 was produced in the same manner as in Example 1, except that the points of intersection between the shallow grooves and the first and second inclined main grooves were positioned at a distance of 3/5 or greater of the length of the respective first and second inclined main grooves from their width direction outer ends.

### <Comparative Example 1>

The motorcycle tire of Comparative Example 1 was produced in the same manner as in Example 1, except that the shallow grooves were inclined in the same direction as the first and second inclined main grooves.

### <Comparative Example 2>

The motorcycle tire of Comparative Example 2 was produced in the same manner as in Example 1, except that the shallow grooves extended to the central part.

The thus obtained tires were each assembled to a wheel having a rim size of MT3.5 × 17 inches and fitted to a 1,000-cc motorcycle as the front tire at an inner pressure of 250 kPa. As the rear tire, a conventional tire was fitted. This rear tire had a size of 190/55ZR17M/C, a rim size of MT6.0 × 17 inches and an inner pressure of 290 kPa. This motorcycle was driven on a test track, and the drainage performance of the front tire on wet road and the tire wear resistance were evaluated by the following methods.

### <Wear Resistance of Central part>

After the completion of the driving test performed by a test rider, the wear amount of each tire was measured using a depth gauge and compared. The results thereof are shown as index values where a value of 100 represents the wear amount of the tire of Comparative Example 1. A larger value indicates superior wear resistance.

### <Drainage Performance>

The strength of the gripping force of each tire on wet road and the change in the gripping strength in response to tilting of the tire were evaluated by the test rider based on the feeling. The results thereof are shown as index values where a value of 100 represents the tire of Comparative Example 1. A larger value indicates superior drainage performance.

**[Table 1]**

| | Example 1 | Example 2 | Example 3 | Example 4 |
|---|---|---|---|---|
| Match between the inclination direction of shallow grooves and the direction of first and second inclined main grooves*¹ | ○ | ○ | ○ | ○ |
| Extension of shallow grooves to the central part*² | ○ | ○ | ○ | ○ |
| Position of the points of intersection between shallow grooves and first and second inclined main grooves *³ | less than 1/2 | less than 1/2 | less than 1/2 | less than 1/2 |
| Presence or absence of extension of shallow grooves to the tire width direction outer side of second inclined main grooves | ○ | × | ○ | ○ |
| Presence or absence of intersection between shallow grooves and first and second inclined main grooves | ○ | ○ | × | ○ |
| Shallow groove depth (mm) | 0.3 | 0.3 | 0.3 | 1.0 |
| Wear resistance of the central part (index) | 100 | 100 | 100 | 95 |
| Drainage performance (index) | 110 | 105 | 105 | 110 |

| | | | | |
|---|---|---|---|---|
| *1: A symbol of "o" was assigned when the inclination direction of the shallow grooves and that of the first and second inclined main grooves were different, and a symbol of "×" was assigned when these inclination directions were the same. *2: A symbol of "o" was assigned when the shallow grooves did not extend to the central part, and a symbol of "×" was assigned when the shallow grooves extended to the central part. *3: Indicates the position of the points of intersection between the shallow grooves and the inclined main grooves in terms of the ratio of the width-direction length of the respective inclined main grooves from their tire width direction outer ends. | | | | |

**[Table 2]**

| | Example 5 | Comparative Example 1 | Comparative Example 2 |
|---|---|---|---|
| Match between the inclination direction of shallow grooves and the direction of first and second inclined main grooves*¹ | ○ | × | ○ |
| Extension of shallow grooves to the central part*² | ○ | ○ | × |
| Position of the points of intersection between shallow grooves and first and second inclined main grooves *³ | not less than 3/5 | less than 1/2 | less than 1/2 |
| Presence or absence of extension of shallow grooves to the tire width direction outer side of second inclined main grooves | ○ | ○ | ○ |
| Presence or absence of intersection between shallow grooves and first and second inclined main grooves | ○ | ○ | ○ |
| Shallow groove depth (mm) | 0.3 | 0.3 | 0.3 |
| Wear resistance of the central part (index) | 100 | 100 | 85 |
| Drainage performance (index) | 105 | 100 | 110 |

From the above, it is seen that the tire of the present invention has excellent wear resistance and excellent drainage performance.

### DESCRIPTION OF SYMBOLS

1: first inclined main groove
2: second inclined main groove
3: shallow groove
10: tread section
100: motorcycle tire (tire)
101: tread section
102: side wall section
103: bead section
104: carcass
105: bead core
106: belt layer
107: spiral belt layer
104: carcass
105: bead core
106: belt layer
107: spiral belt layer

## Claims

1. A motorcycle tire (100) which comprises: a tread section (10, 101); and side wall sections (102) and bead sections (103) that continuously extend on both sides of said tread section (10, 101), and whose rotation direction when fitted to a motorcycle is designated, wherein
in said tread section (10, 101), first inclined main grooves (1) of a linear or curved shape with no bending point which are inclined with respect to the tire circumferential direction, second inclined main grooves (2) of a linear or curved shape with no bending point which are inclined in the same direction as said first inclined main grooves (1) but at a different angle, and shallow grooves (3) which are inclined in a different direction from said first inclined main grooves (1) and said second inclined main grooves (2) with respect to the tire circumferential direction are arranged,
first inclined main grooves (1) and second inclined main grooves (2) are inclined with respect to the tire circumferential direction by forming an angle between a line connecting the centers of the tire width direction ends of the respective grooves and the tire circumferential direction,
said shallow grooves (3) are arranged only in a shoulder part,
the first inclined main grooves (1) are arranged to extend from a central part to a shoulder part, and the second inclined main grooves (2) are arranged in the shoulder part,
the first inclined main grooves (1) extend over the tire equator (CL),
a central part is a region of the tread section (10) that comes into contact with the road surface when the tire (100) is filled with air at a normal inner pressure, a normal load is applied thereto and a motorcycle fitted with the tire is put in a standing position, and a shoulder part is a region of the tread section (10) on one side of the central part, and
the shallow grooves (3) are grooves having a depth of 10% or less with respect to the depth of the respective first inclined main grooves (1) and second inclined main grooves (2).

2. The motorcycle tire (100) according to claim 1, wherein said first inclined main grooves (1) and said second inclined main grooves (2) intersect with said shallow grooves (3).

3. The motorcycle tire (100) according to claim 1, wherein
said first inclined main grooves (1) and said shallow grooves (3) intersect with each other on the tire width direction outer side relative to the midpoints of said first inclined main grooves (1) in the tire width direction, and
said second inclined main grooves (2) and said shallow grooves (3) intersect with each other on the tire width direction outer side relative to the midpoints of said second inclined main grooves (2) in the tire width direction.

4. The motorcycle tire (100) according to claim 1, wherein said shallow grooves (3) extend to the tire width direction outer side relative to the tire width direction outer ends of said second inclined main grooves (2).

5. The motorcycle tire (100) according to claim 1, wherein said shallow grooves (3) have a depth of 0.1 to 0.5 mm.

6. The motorcycle tire (100) according to claim 1, which is used as a front tire.

7. The motorcycle tire (100) according to claim 1, wherein the part of each first inclined main groove (1) where the distance between the groove walls in the tire circumferential direction is the maximum (W1) exists on the inner side relative to the midpoint (C1) of the first inclined main groove (1) in the tire width direction; and
the part of each second inclined main groove (2) where the distance between the groove walls in the tire circumferential direction is the maximum (W2) exists on the outer side relative to the midpoint (C2) of the second inclined main groove (2) in the tire width direction.

8. The motorcycle tire (100) according to claim 1, wherein the part of each first inclined main groove (1) where the distance between the groove walls in the tire circumferential direction is the maximum is the tire width direction inner end (1a) of the groove wall on the rotation-direction leading side of the first inclined main groove (1), and the part of each second inclined main groove (2) where the distance between the groove walls in the tire circumferential direction is the maximum is the tire width direction outer end (2a) of the groove wall on the rotation-direction trailing side of the second inclined main groove (2).

9. The motorcycle tire (100) according to claim 1, wherein the second inclined main grooves (2) at least partially overlap with the first inclined main grooves (1) in the tire circumferential direction.

10. The motorcycle tire (100) according to claim 9, wherein the tire width direction length (L) of the region where the first inclined main grooves (1) and the second inclined main grooves (2) overlap with each other is 30 to 60% of the length of the first inclined main grooves (1) in the tire circumferential direction.

## Patentansprüche

1. Motorradreifen (100), der Folgendes umfasst: eine Laufflächensektion (10, 101) und Seitenwandsektionen (102) und Wulstsektionen (103), die sich durchgehend auf beiden Seiten der Laufflächensektion (10, 101) erstrecken, und dessen Drehrichtung, wenn er an einem Motorrad angebracht ist, festgelegt ist, wobei
in der Laufflächensektion (10, 101) erste geneigte Hauptrillen (1) mit einer linearen oder gekrümmten Form ohne Biegungspunkt, die in Bezug auf die Reifenumfangsrichtung geneigt sind, zweite geneigte Hauptrillen (2) mit einer linearen oder gekrümmten Form ohne Biegungspunkt, die in der gleichen Richtung wie die ersten geneigten Hauptrillen (1), aber in einem anderen Winkel geneigt sind, und flache Rillen (3), die in einer von den ersten geneigten Hauptrillen (1) und den zweiten geneigten Hauptrillen (2) verschiedenen Richtung in Bezug auf die Reifenumfangsrichtung geneigt sind, angeordnet sind,
die ersten geneigten Hauptrillen (1) und die zweiten geneigten Hauptrillen (2) dadurch in Bezug auf die Reifenumfangsrichtung geneigt sind, dass sie einen Winkel zwischen einer Geraden, welche die Mitten der Enden in Reifenbreitenrichtung der jeweiligen Rillen verbindet, und der Reifenumfangsrichtung bilden,
die flachen Rillen (3) nur in einem Schulterteil angeordnet sind,
die ersten geneigten Hauptrillen (1) so angeordnet sind, dass sie sich von einem Mittelteil zu einem Schulterteil erstrecken, und die zweiten geneigten Hauptrillen (2) in dem Schulterteil angeordnet sind,
sich die ersten geneigten Hauptrillen (1) über den Reifenäquator (CL) erstrecken, ein Mittelteil ein Bereich der Laufflächensektion (10) ist, der in Berührung mit der Straßenoberfläche kommt, wenn der Reifen (100) mit Luft bei einem normalen Innendruck gefüllt ist, eine normale Last auf denselben ausgeübt wird und ein mit dem Reifen versehenes Motorrad in eine stehende Stellung gebracht ist, und ein Schulterteil ein Bereich der Laufflächensektion (10) auf einer Seite des Mittelteils ist und
die flachen Rillen (3) Rillen sind, die eine Tiefe von 10 % oder weniger in Bezug auf die Tiefe der jeweiligen ersten geneigten Hauptrillen (1) und zweiten geneigten Hauptrillen (2) aufweisen.

2. Motorradreifen (100) nach Anspruch 1, wobei sich die ersten geneigten Hauptrillen (1) und die zweiten geneigten Hauptrillen (2) mit den flachen Rillen (3) schneiden.

3. Motorradreifen (100) nach Anspruch 1, wobei
sich die ersten geneigten Hauptrillen (1) und die flachen Rillen (3) miteinander auf der im Verhältnis zu den Mittelpunkten der ersten geneigten Hauptrillen (1) in der Reifenbreitenrichtung in Reifenbreitenrichtung äußeren Seite schneiden und
sich die zweiten geneigten Hauptrillen (2) und die flachen Rillen (3) miteinander auf der im Verhältnis zu den Mittelpunkten der zweiten geneigten Hauptrillen (2) in der Reifenbreitenrichtung in Reifenbreitenrichtung äußeren Seite schneiden.

4. Motorradreifen (100) nach Anspruch 1, wobei sich die flachen Rillen (3) zu der im Verhältnis zu den in Reifenbreitenrichtung äußeren Enden der zweiten geneigten Hauptrillen (2) in Reifenbreitenrichtung äußeren Seite erstrecken.

5. Motorradreifen (100) nach Anspruch 1, wobei die flachen Rillen (3) eine Tiefe von 0,1 bis 0,5 mm aufweisen.

6. Motorradreifen (100) nach Anspruch 1, der als ein vorderer Reifen verwendet wird.

7. Motorradreifen (100) nach Anspruch 1, wobei der Teil jeder ersten geneigten Hauptrille (1), wo der Abstand zwischen den Rillenwänden in der Reifenumfangsrichtung das Maximum (W1) ist, auf der im Verhältnis zu dem Mittelpunkt (C1) der ersten geneigten Hauptrille (1) in der Reifenbreitenrichtung inneren Seite vorhanden ist und
der Teil jeder zweiten geneigten Hauptrille (2), wo der Abstand zwischen den Rillenwänden in der Reifenumfangsrichtung das Maximum (W2) ist, auf der im Verhältnis zu dem Mittelpunkt (C2) der zweiten geneigten Hauptrille (2) in der Reifenbreitenrichtung äußeren Seite vorhanden ist.

8. Motorradreifen (100) nach Anspruch 1, wobei der Teil jeder ersten geneigten Hauptrille (1), wo der Abstand zwischen den Rillenwänden in der Reifenumfangsrichtung das Maximum ist, das in der Reifenbreitenrichtung innere Ende (1a) der Rillenwand auf der in Drehrichtung vorderen Seite der ersten geneigten Hauptrille (1) ist und der Teil jeder zweiten geneigten Hauptrille (2), wo der Abstand zwischen den Rillenwänden in der Reifenumfangsrichtung das Maximum ist, das in der Reifenbreitenrichtung äußere Ende (2a) der Rillenwand auf der in Drehrichtung hinteren Seite der zweiten geneigten Hauptrille (2) ist.

9. Motorradreifen (100) nach Anspruch 1, wobei sich die zweiten geneigten Hauptrillen (2) wenigstens teilweise mit den ersten geneigten Hauptrillen (1) in der Reifenumfangsrichtung überlappen.

10. Motorradreifen (100) nach Anspruch 9, wobei die Länge (L) in der Reifenbreitenrichtung des Bereichs, wo sich die ersten geneigten Hauptrillen (1) und die zweiten geneigten Hauptrillen (2) miteinander überlappen, 30 bis 60 % der Länge der ersten geneigten Hauptrillen (1) in der Reifenumfangsrichtung beträgt.

## Revendications

1. Bandage pneumatique pour motocycle (100), comprenant : une section de bande de roulement (10, 101) ; et des sections de flanc (102) et des sections de talon (103) s'étendant en continu sur les deux côtés de ladite section de bande de roulement (10, 101) et dont la direction de rotation, lors de son ajustement sur un motocycle, est désignée ; dans lequel :
dans ladite section de bande de roulement (10, 101) sont agencées des premières rainures principales inclinées (1), de forme linéaire ou courbée sans point de flexion, inclinées par rapport à la direction circonférentielle du bandage pneumatique, des deuxièmes rainures principales inclinées (2), d'une forme linéaire ou courbée sans point de flexion, inclinées dans la même direction que lesdites premières rainures inclinées (1), mais à un angle différent ; et des rainures peu profondes (3) inclinées dans une direction différente de celle desdites rainures principales inclinées (1) et desdites deuxièmes rainures principales inclinées (2) par rapport à la direction circonférentielle du bandage pneumatique ;
les premières rainures principales inclinées (1) et les deuxièmes rainures principales inclinées (2) sont inclinées par rapport à la direction circonférentielle du bandage pneumatique en formant un angle entre une ligne connectant les centres des extrémités, dans la direction de la largeur du bandage pneumatique, des rainures respectives et la direction circonférentielle du bandage pneumatique ;
lesdites rainures peu profondes (3) sont agencées uniquement dans une partie d'épaulement ;
les premières rainures principales inclinées (1) sont agencées de sorte à s'étendre d'une partie centrale vers une partie d'épaulement, les deuxièmes rainures principales inclinées (2) étant agencées dans la partie d'épaulement ;
les premières rainures principales inclinées (1) s'étendent au-dessus de l'équateur du bandage pneumatique (CL) ;
une partie centrale constitue une région de la section de bande de roulement (10) entrant en contact avec la surface de la route lorsque le bandage pneumatique (100) est rempli d'air à une pression interne normale, une charge normale y étant appliquée, et un motocycle comportant le bandage pneumatique étant mis dans une position de démarrage, et une partie d'épaulement constitue une région de la section de bande de roulement (10) sur un côté de la partie centrale ; et
les rainures peu profondes (3) sont des rainures ayant une profondeur représentant 10% ou moins de la profondeur des premières rainures principales inclinées (1) et des deuxièmes rainures principales inclinées (2).

2. Bandage pneumatique pour motocycle (100) selon la revendication 1, dans lequel lesdites premières rainures principales inclinées (1) et lesdites deuxièmes rainures principales inclinées (2) coupent lesdites rainures peu profondes (3).

3. Bandage pneumatique pour motocycle (100) selon la revendication 1, dans lequel :
lesdites premières rainures principales inclinées (1) et lesdites rainures peu profondes (3) se coupent les unes les autres sur le côté externe, dans la direction de la largeur du bandage pneumatique, par rapport aux points médians desdites premières rainures principales inclinées (1), dans la direction de la largeur du bandage pneumatique ; et
lesdites deuxièmes rainures principales inclinées (2) et lesdites rainures peu profondes (3) se coupent les unes les autres sur le côté externe, dans la direction de la largeur du bandage pneumatique, par rapport aux points médians desdites deuxièmes rainures principales inclinées (2), dans la direction de la largeur du bandage pneumatique.

4. Bandage pneumatique pour motocycle (100) selon la revendication 1, dans lequel lesdites rainures peu profondes (3) s'étendant vers le côté externe, dans la direction de la largeur du bandage pneumatique, par rapport aux extrémités externes, dans la direction de la largeur du bandage pneumatique, desdites deuxièmes rainures principales inclinées (2).

5. Bandage pneumatique pour motocycle (100) selon la revendication 1, dans lequel lesdites rainures peu profondes (3) ont une profondeur comprise entre 0,1 et 0,5 mm.

6. Bandage pneumatique pour motocycle (100) selon la revendication 1, utilisé comme bandage pneumatique avant.

7. Bandage pneumatique pour motocycle (100) selon la revendication 1, dans lequel la partie de chaque première rainure principale inclinée (1), au niveau de laquelle la distance entre les parois de rainures, dans la direction circonférentielle du bandage pneumatique, correspond au maximum (W1), se situe sur le côté interne, par rapport au point médian (C1), de la première rainure principale inclinée (1), dans la direction de la largeur du bandage pneumatique ; et
la partie de chaque deuxième rainure principale inclinée (2), au niveau de laquelle la distance entre les parois de rainure, dans la direction circonférentielle du bandage pneumatique, correspond au maximum (W2), se situe sur le côté externe, par rapport au point médian (C2), de la deuxième rainure principale inclinée (2), dans la direction de la largeur du bandage pneumatique.

8. Bandage pneumatique pour motocycle (100) selon la revendication 1, dans lequel la partie de chaque première rainure principale inclinée (1), au niveau de laquelle la distance entre les parois de rainure, dans la direction circonférentielle du bandage pneumatique, correspond au maximum, constitue l'extrémité interne (la), dans la direction de la largeur du bandage pneumatique, de la paroi de rainure sur le côté avant, dans la direction de rotation, de la première rainure principale inclinée (1), et la partie de chaque deuxième rainure principale inclinée (2), au niveau de laquelle la distance entre les parois de rainure, dans la direction circonférentielle du bandage pneumatique, correspond au maximum, constitue l'extrémité externe (2a), dans la direction de la largeur du bandage pneumatique, de la paroi de rainure, sur le côté arrière, dans la direction de rotation, de la deuxième rainure principale inclinée (2).

9. Bandage pneumatique pour motocycle (100) selon la revendication 1, dans lequel les deuxièmes rainures principales inclinées (2) chevauchent au moins partiellement les premières rainures principales inclinées (1), dans la direction circonférentielle du bandage pneumatique.

10. Bandage pneumatique pour motocycle selon la revendication 9, dans lequel la longueur (L), dans la direction de la largeur du bandage pneumatique, de la région au niveau de laquelle les premières rainures principales inclinées (1) et les deuxièmes rainures principales inclinées (2) se chevauchent les unes les autres, représente 30 à 60% de la longueur des premières rainures principales inclinées (1), dans la direction circonférentielle du bandage pneumatique.
